# EUROPÄISCHE PATENTANMELDUNG

(11) **EP 1 579 752 A1**
(43) Veröffentlichungstag der Anmeldung: **28.09.2005**
(21) Anmeldenummer: 05101971.9
(22) Anmeldetag: 14.03.2005
(51) Int. Cl.: A01B 73/00, A01D 75/00

(54) **Wagen zur Abstützung eines Erntevorsatzes**

(30) Priorität: 27.03.2004 DE 102004015164
(71) Anmelder: Maschinenfabrik Kemper GmbH & Co. KG, 48973 Stadtlohn (DE)
(72) Erfinder: Wübbels, Richard, 46414, Rhede (DE); Thomas, Lukas, 48683, Ahaus (DE)
(74) Vertreter: Holst, Sönke

(57) **Zusammenfassung**

Die Erfindung bezieht sich auf einen Wagen (10) zur Abstützung eines Erntevorsatzes (28), wobei der Wagen (10) ein Gestell (12) und mindestens ein sich vom Gestell (12) nach unten erstreckendes Rad (14) aufweist und das Gestell (12) zur Abstützung eines Erntevorsatzes (28) und Gewichtsentlastung der Vorderräder einer selbstfahrenden Erntemaschine (26) bei einer Straßenfahrt lösbar an dem an der Erntemaschine (26) angebrachten Erntevorsatz (28) befestigbar und zum Erntebetrieb auf einem Feld vom Erntevorsatz (28) trennbar ist.

Es wird vorgeschlagen, dass das Gestell (12) mit einer Wagenpositionierungseinrichtung (24) ausgestattet ist, die geeignet ist, den Wagen (10) im Zusammenwirken mit einer komplementären Erntevorsatzpositionierungseinrichtung (30) des Erntevorsatzes selbsttätig relativ zum Erntevorsatz (28) in eine Sollposition für die Straßenfahrt zu verbringen, in der das Gestell (12) mit dem Erntevorsatz (26) verbindbar ist.

## Beschreibung

Die Erfindung betrifft einen Wagen zur Abstützung eines Erntevorsatzes, wobei der Wagen ein Gestell und mindestens ein sich vom Gestell nach unten erstreckendes Rad aufweist und das Gestell zur Abstützung eines Erntevorsatzes und Gewichtsentlastung der Vorderräder einer selbstfahrenden Erntemaschine zu einer Straßenfahrt lösbar an dem an der Erntemaschine angebrachten Erntevorsatz befestigbar und zum Erntebetrieb auf einem Feld vom Erntevorsatz trennbar ist.

An selbstfahrenden Erntemaschinen finden Erntevorsätze zum Abernten und Einbringen von Erntegut Verwendung. Aufgrund von Leistungssteigerungen der Erntemaschinen in jüngerer Zeit werden immer breitere Erntevorsätze verwendet, die eine relativ große Masse aufweisen. Während Schneidwerke für Mähdrescher gewöhnlich in sich starr sind und zum Straßentransport vom Mähdrescher getrennt und auf einem Transportwagen abgelegt werden, werden Maispflücker für Mähdrescher und Maisgebisse für Feldhäcksler in der Regel klappbar ausgeführt. Zum Straßentransport werden äußere Seitenteile der Erntevorsätze in eine Transportstellung verschwenkt, in der Regel nach oben oder innen. Sie bleiben beim Straßentransport an der Vorderseite der Erntemaschine befestigt. Dabei stellt sich die gesetzlich zulässige Gewichtsbelastung der Vorderräder der Erntemaschine bei den zunehmend breiter werdenden Erntevorsätzen als problematisch dar.

In der EP 1 046 329 A wurde vorgeschlagen, ein zusätzliches Rad zur Abstützung des Erntevorsatzes bereitzustellen, das beim Straßentransport der Erntemaschine in Bodenkontakt gebracht werden kann. Dadurch erhält man eine zusätzliche Abstützung, die eine Einhaltung der gesetzlichen Vorschriften erleichtert oder ermöglicht. In einer Ausführungsform ist das zusätzliche Rad an einem separaten Wagen angebracht, der unter den Erntevorsatz schiebbar und dort befestigbar ist. Dazu wird der Erntevorsatz angehoben, der Wagen darunter geschoben, in seine korrekte Position verbracht und durch Bolzen oder dergleichen am Erntevorsatz befestigt. Schließlich wird der Erntevorsatz wieder abgesenkt, so dass das zusätzliche Rad des Wagens den Erntevorsatz abstützt und die Belastung der Räder der Erntemaschine vermindert. Zum Betrieb auf einem Feld wird der Wagen in umgekehrter Reihenfolge demontiert.

Dabei ist als nachteilig anzusehen, dass der Bediener zunächst aus der Kabine der Erntemaschine heruntersteigen muss, um den Wagen anzubringen. Außerdem muss er den Erntevorsatz exakt in der richtigen Höhe positionieren, da anderenfalls der Wagen nur durch Anheben mit dem Erntevorsatz gekoppelt werden kann. Die Anbringung des Wagens ist somit relativ schwierig und zeitaufwändig.

Die der Erfindung zu Grunde liegende Aufgabe wird darin gesehen, einen demgegenüber verbesserten Wagen zur Abstützung eines an einer selbstfahrenden Erntemaschine angebrachten Erntevorsatzes bei der Straßenfahrt bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Wagen umfasst ein Gestell und ein sich davon nach unten erstreckendes Rad. Das Gestell ist zur Abstützung eines Erntevorsatzes und zur Gewichtsentlastung der Vorderräder einer den Erntevorsatz tragenden, selbstfahrenden Erntemaschine zu einer Straßenfahrt lösbar an dem an der Erntemaschine angebrachten Erntevorsatz befestigbar und zum Erntebetrieb auf einem Feld vom Erntevorsatz trennbar. Es wird vorgeschlagen, das Gestell des Wagens mit einer Wagenpositionierungseinrichtung auszustatten, während der Erntevorsatz mit einer dazu passenden, komplementären Erntevorsatzpositionierungseinrichtung versehen wird. Die Erntevorsatzpositionierungseinrichtung wirkt mit der Wagenpositionierungseinrichtung zusammen, wenn der Wagen am Erntevorsatz angebracht werden soll. Dadurch erfolgt eine selbsttätige Ausrichtung des Wagens relativ zum Erntevorsatz. Der Wagen gelangt somit in seine Sollposition für eine Straßenfahrt. Anschließend kann der Wagen am Erntevorsatz fixiert werden.

Auf diese Weise wird die Positionierung des Wagens gegenüber dem Erntevorsatz wesentlich erleichtert.

Obwohl denkbar wäre, den Wagen mit geeigneten Antrieben zu versehen, die ihn gegenüber dem Erntevorsatz bewegen und vermittels der Wagenpositionierungseinrichtung und der Erntevorsatzpositionierungseinrichtung in die gewünschte Position verbringen, ist es einfacher und wirtschaftlicher, die Positionierung des Wagens durch eine Vorwärtsbewegung des Erntevorsatzes und der Erntemaschine zu bewerkstelligen.

Dabei kann das Gestell des Wagens durch die Wagenpositionierungseinrichtung und die Erntevorsatzpositionierungseinrichtung in seitlicher Richtung, d. h. quer zur Vorwärtsrichtung des Erntevorsatzes, bewegt werden. Er kann auch in vertikaler Richtung bewegt werden, insbesondere durch Verschwenken um die Achse seines Rades oder Anheben.

Als Erntevorsatzpositionierungseinrichtung dient vorzugsweise eine bereits vorhandene Teilerspitze, die mit einer zu ihrer Form komplementären, sich konisch verengenden, taschenförmigen Wagenpositionierungseinrichtung zusammenwirkt.

Der erfindungsgemäße Wagen eignet sich zur Abstützung beliebiger Arten von Erntevorsätzen an allen Typen von Erntemaschinen. Beispiele für Erntemaschinen sind Feldhäcksler, Mähdrescher oder Baumwollpflücker, während als Erntevorsätze z. B. Maispflücker, Maisgebisse, Baumwollerntevorsätze und Schneidwerke, jeweils insbesondere in klappbarer Ausführungsform, in Frage kommen.

In den Zeichnungen ist ein nachfolgend näher beschriebenes Ausführungsbeispiel der Erfindung dargestellt. Es zeigt:
- Fig. 1: eine Seitenansicht eines erfindungsgemäßen Wagens,
- Fig. 2: eine Draufsicht auf den Wagen aus Figur 1,
- Fig. 3 bis 6: seitliche Ansichten einer Erntemaschine mit einem Erntevorsatz beim Ankoppeln des Wagens, und
- Fig. 7 bis 10: Draufsichten auf die mittlere Teilerspitze des Erntevorsatzes und den Wagen beim Ankoppeln.

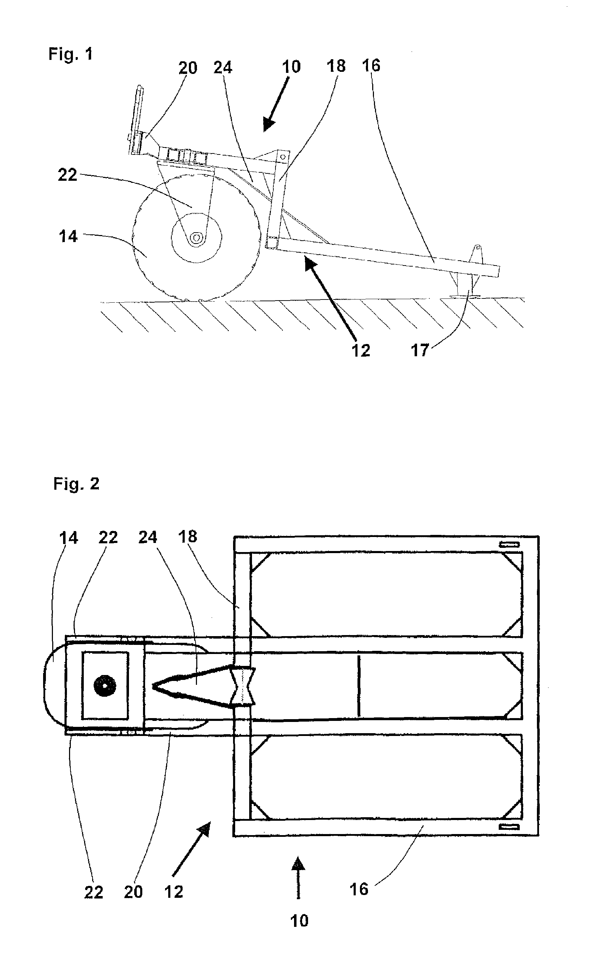

In der Figur 1 ist ein erfindungsgemäßer Wagen 10 in Seitenansicht dargestellt. Er setzt sich aus einem Gestell 12 und einem Rad 14 zusammen. Das Gestell 12 umfasst ein fachwerkartiges Rückteil 16, das über etwa vertikal verlaufende Streben 18 mit einem Vorderteil 20 verbunden ist und unterhalb des Vorderteils 10 angeordnete Radhalterungen 22, zwischen denen das Rad 14 um eine sich seitlich erstreckende Achse drehbar gelagert ist. An der dem Rückteil 16 zugewandten Seite des Vorderteils 20 befindet sich eine Wagenpositionierungseinrichtung 24, die eine taschen-oder tütenartige, in Figur 1 nach rechts gerichtete Öffnung aufweist, deren Unterseite sich schräg nach hinten und unten bis zum Rückteil 16 hinunter erstreckt. Rückwärtige Stützen 17 stützen den Rückteil 16 des Gestells auf dem Erdboden ab. Die Figur 2 zeigt eine Draufsicht auf den Wagen 10. Das Rad 14 ist in der dargestellten Ausführungsform starr am Gestell 12 angelenkt, es könnte aber auch nachlaufend lenkbar sein.

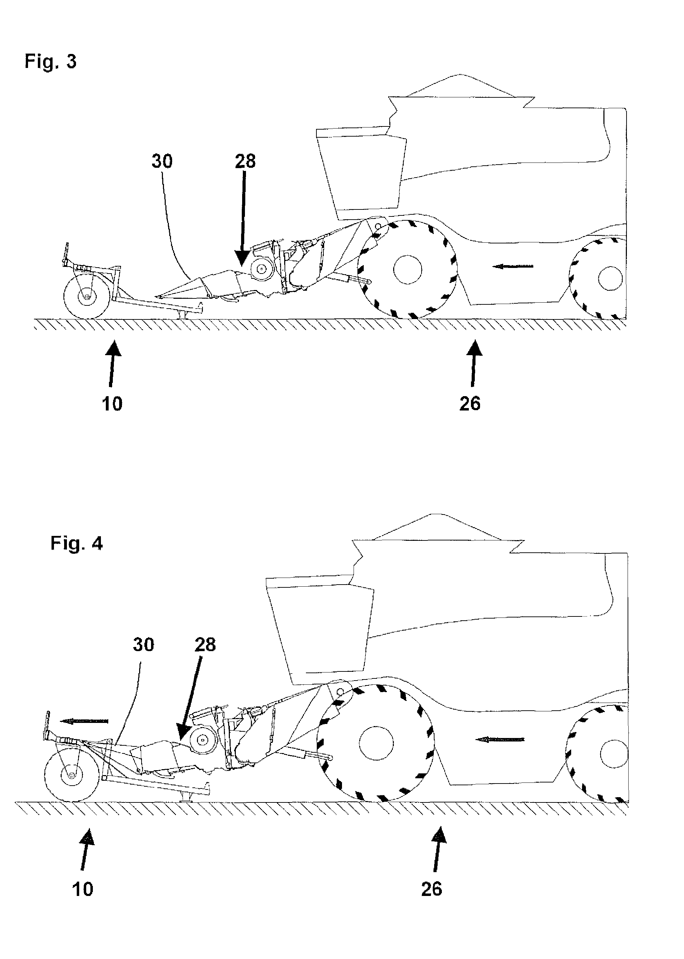

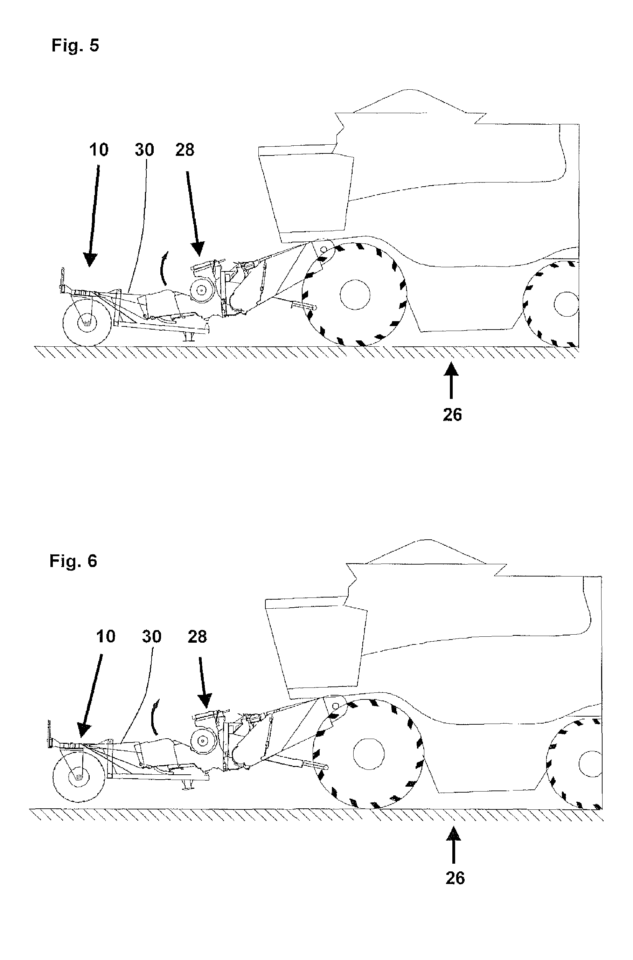

Die Figuren 3 bis 6 zeigen eine Serie von Seitenansichten einer selbstfahrenden Erntemaschine 26 in Form eines Mähdreschers mit einem an ihrer Vorderseite angebrachten Erntevorsatz 28. Der Erntevorsatz 28 ist durch Verschwenken des Schrägförderers der Erntemaschine 26 um die obere Schrägfördererwelle anhebbar und in der dargestellten Ausführungsform ein Maispflücker mit einer Anzahl nebeneinander angeordneter Einzugs- und Pflückeinrichtungen. Eine Querförderschnecke dient zum Transport der abgetrennten Fruchtstände zum Schrägförderer der Erntemaschine 26. Zwischen den Einzugs- und Pflückeinrichtungen ist der Erntevorsatz 28 an seiner Vorderseite mit Teilerspitzen ausgestattet, die in Fahrtrichtung (in Figur 5 durch den Pfeil an der Erntemaschine 26 angedeutet) spitz zulaufen. Sie dienen zum Teilen der Reihen der auf einem Feld stehenden Maispflanzen, damit letztere in den Wirkbereich der Einzugs- und Pflückeinrichtungen gelangen.

Die mittlere Teilerspitze dient als Erntevorsatzpositionierungseinrichtung 30. Die Wagenpositionierungseinrichtung 24 ist komplementär zur Erntevorsatzpositionierungseinrichtung 30 geformt. Der Vorderbereich der mittleren Teilerspitze kann demnach exakt passend in die Wagenpositionierungseinrichtung 24 eingeführt werden.

In der Figur 3 ist eine Anfangsposition dargestellt. Der Wagen 10 soll am Erntevorsatz 28 angebracht werden, damit die Belastung der Vorderräder der Erntemaschine 26 bei einer Straßenfahrt durch eine Abstützung des Erntevorsatzes 28 durch den Wagen 10 vermindert werden kann. Der Wagen 10 muss anfangs nicht exakt parallel zur Fahrtrichtung der Erntemaschine 26 ausgerichtet sein, sondern kann einen gewissen Winkel mit ihr einschließen. Durch die Bereitstellung der Wagenpositionierungseinrichtung 24 wird eine selbsttätige Ausrichtung des Wagens 10 gegenüber dem Erntevorsatz 28 in seitlicher und vertikaler Richtung möglich, ohne dass ein Bediener manuell eingreifen müsste. Dazu wird im Einzelnen folgendermaßen vorgegangen:

In der Anfangsposition gemäß Figur 3 wird die Erntemaschine 26 mit dem Erntevorsatz 28 derart an den Wagen 10 herangefahren, dass die Erntevorsatzpositionierungseinrichtung 30 vor und dann in die Wagenpositionierungseinrichtung 24 gelangt. Eine geeignete Höhe des Erntevorsatzes 28 ist erreicht, wenn die Spitze der Erntevorsatzpositionierungseinrichtung 30 an der Unterseite der Wagenpositionierungseinrichtung 24 anliegt.

Beim Weiterfahren der Erntemaschine 26 in Vorwärtsrichtung gelangt die Erntevorsatzpositionierungseinrichtung 30 dann immer weiter in die Wagenpositionierungseinrichtung 24 hinein, wie anhand der Figur 4 erkennbar ist. Dabei kann die um eine quer zur Fahrtrichtung schwenkbar am Erntevorsatz 28 befestigte Erntevorsatzpositionierungseinrichtung 30 nach oben verschwenken. Die Spitze der Erntevorsatzpositionierungseinrichtung 30 schlägt dabei an einem Endanschlag der Wagenpositionierungseinrichtung 24 an. Durch weiteres Vorfahren wird der Wagen 10 gegenüber dem Erntevorsatz 28 in seitlicher Richtung ausgerichtet.

Anschließend wird, wie in der Figur 5 dargestellt, der Wagen 10 durch Anheben des Erntevorsatzes 28 angehoben. Der Wagen 10 ist dann in seitlicher Richtung zentriert und in einer vertikalen Position, in der er am Erntevorsatz 28 befestigt werden kann. Demnach kann der zentrierte und ausgerichtete Wagen 10 in der in Figur 5 dargestellten Position durch beliebige Mittel, beispielsweise Schrauben und Muttern oder Schnellspannverschlüsse, am Erntevorsatz 28 befestigt werden. Um zu vermeiden, dass der Bediener zur Befestigung des Wagens 10 am Erntevorsatz 28 die Fahrerkabine verlassen muss, können dafür auch fremdkraftbetätigte Arretierungseinrichtungen vorgesehen werden, z. B. Hydraulikzylinder, die vom Arbeitsplatz des Bedieners in der Fahrerkabine aus steuerbar sind.

Nach Absenken des Erntevorsatzes 28, wie in der Figur 6 dargestellt, ist die Erntemaschine 26 für die Straßenfahrt vorbereitet. Der Wagen 10 entlastet die Vorderräder der Erntemaschine 10. Das Abnehmen des Wagens 10 erfolgt in umgekehrter Reihenfolge.

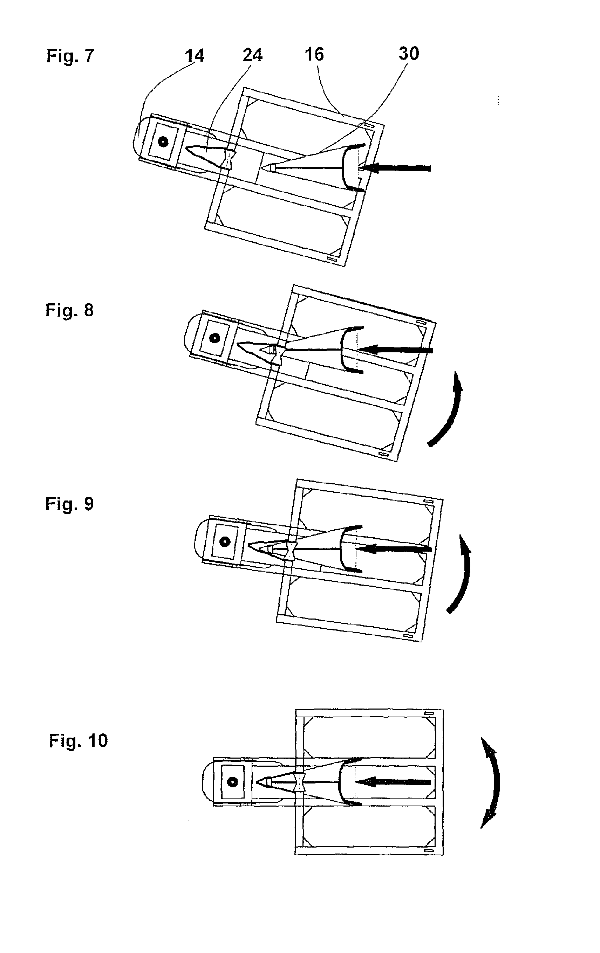

Anhand der in den Figuren 7 bis 10 dargestellten Sequenz ist das Eindringen der Spitze der Erntevorsatzpositionierungseinrichtung 30 in die Wagenpositionierungseinrichtung 24 und die dadurch bewirkte, selbsttätige seitliche Ausrichtung des Wagens 10 erkennbar.

## Patentansprüche

1. Wagen (10) zur Abstützung eines Erntevorsatzes (28), wobei der Wagen (10) ein Gestell (12) und mindestens ein sich vom Gestell (12) nach unten erstreckendes Rad (14) aufweist und das Gestell (12) zur Abstützung eines Erntevorsatzes (28) und Gewichtsentlastung der Vorderräder einer selbstfahrenden Erntemaschine (26) bei einer Straßenfahrt lösbar an dem an der Erntemaschine (26) angebrachten Erntevorsatz (28) befestigbar und zum Erntebetrieb auf einem Feld vom Erntevorsatz (28) trennbar ist, **dadurch gekennzeichnet, dass** das Gestell (12) mit einer Wagenpositionierungseinrichtung (24) ausgestattet ist, die geeignet ist, den Wagen (10) im Zusammenwirken mit einer komplementären Erntevorsatzpositionierungseinrichtung (30) des Erntevorsatzes (28) selbsttätig relativ zum Erntevorsatz (28) in eine Sollposition für die Straßenfahrt zu verbringen, in der das Gestell (12) mit dem Erntevorsatz (26) verbindbar ist.

2. Wagen (10) nach Anspruch 1, **dadurch gekennzeichnet, dass** der Wagen (10) gegenüber dem Erntevorsatz (28) selbsttätig in die Sollposition für die Straßenfahrt verbringbar ist, indem der Erntevorsatz (28) in seiner Vorwärtsrichtung bewegt wird.

3. Wagen (10) nach Anspruch 1 oder 2, **dadurch gekennzeichnet, dass** die Erntevorsatzpositionierungseinrichtung (30) und die Wagenpositionierungseinrichtung (24) eine seitliche und/oder vertikale Führung des Wagens (10) bereitstellen.

4. Wagen (10) nach einem der Ansprüche 1 bis 3, **dadurch gekennzeichnet, dass** die Erntevorsatzpositionierungseinrichtung (30) eine Teilerspitze ist und die Wagenpositionierungseinrichtung (24) eine im Wesentlichen konische Taschenform hat.

5. Kombination aus einem Wagen (10) nach einem der vorhergehenden Ansprüche mit einer Erntemaschine (26), insbesondere einem Mähdrescher oder Feldhäcksler, und einem Erntevorsatz (28), insbesondere einem Maispflücker oder Maisgebiss.
